# EUROPÄISCHE PATENTSCHRIFT

(11) **EP 1 104 368 B1**
(45) Veröffentlichungstag und Bekanntmachung des Hinweises auf die Patenterteilung: **01.06.2005**
(21) Anmeldenummer: 00945572.6
(22) Anmeldetag: 26.05.2000
(51) Int. Cl.: B60S 1/04, B29C 45/14

(54) **PLATINE**
MAIN PLATE
PLATINE

(30) Priorität: 15.06.1999 DE 19927067
(43) Veröffentlichungstag der Anmeldung: 06.06.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/001722
(87) Internationale Veröffentlichungsnummer: WO 2000/076816

(56) Entgegenhaltungen:
- EP-A- 0 852 195
- DE-A- 3 919 837
- GB-A- 2 258 145
- US-A- 5 522 280

## Beschreibung

Die Erfindung geht von einer Platine nach dem Oberbegriff des Anspruchs 1 aus.

Wischeranlagen mit mehreren Scheibenwischern für Kraftfahrzeuge werden mit deren Wischerlagern direkt oder indirekt über eine Platine an der Karosserie des Kraftfahrzeugs befestigt. Die Platine bzw. eine Rohrplatine - wenn der Wischerträger auch rohrförmige Hohlprofile enthält -, umfaßt eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen weitere Kurbeln an, die mit einer Antriebswelle für jeden Scheibenwischer fest verbunden sind.

Ferner ist es möglich, daß nur die Antriebswelle eines Scheibenwischers vom Wischermotor angetrieben wird, während ein anderer Scheibenwischer über ein Viergelenkhebelgetriebe mit dem ersten Scheibenwischer verbunden sein kann und eine Lagerachse besitzt. Die einem Scheibenwischer zugeordnete Antriebswelle bzw. die Lagerachse ist in einem Wischerlager gelagert. Im Folgenden treffen die Ausführungen zu einer Antriebswelle auch für eine Lagerachse sinngemäß zu, die nicht mehr ausdrücklich erwähnt wird.

Die Lagergehäuse sind an den Enden der Platine befestigt oder angeformt. Die Platine positioniert den Wischerantrieb relativ zu den Wischerlagern und nimmt im wesentlichen die vom Wischerantrieb erzeugten Antriebskräfte auf. Außerdem bestimmt sie den Anstellwinkel der Achsen der Wischerlager zur Fahrzeugscheibe und damit die grobe Position des Wischblatts. Ihre Formstabilität während der Lebensdauer unter dem Einfluß extremer Betriebsparameter, wie beispielsweise Temperaturen, Blockiersituationen unter Schneelast, Schwingungen, Erschütterungen usw., sind daher für ein gutes Wischergebnis besonders wichtig. Ferner dient die Platine zur Vormontage der Antriebsteile und Wischerlager, um die Montage am Fahrzeug zu erleichtern.

Aus der DE-GM 74 34 119 ist eine Rohrplatine bekannt, die aus einem Vierkantrohr hergestellt ist, an das eine als Motorplatine dienende Platte angeschweißt ist. An den Enden des Vierkantrohrs ist jeweils ein Wischerlager fixiert. Hierzu weist das Gehäuse des Wischerlagers Ansätze auf, die in das Platinenrohr gesteckt und durch Schrauben oder durch Taumelnfetung befestigt sind. Ferner kann der Ansatz leicht konisch sein und das Platinenrohr durch Preßsitz gehalten werden. Derartige Rohrplatinen oder Rohrrahmenanlagen sind trotz einer leichten Bauweise sehr stabil, jedoch sind zahlreiche Montagevorgänge erforderlich und die Verbindungsstellen müssen sorgfältig kontrolliert werden. Aus Kostengründen wird ein gerades Trägerrohr angestrebt, das keinen Vorbiegearbeitsgang erfordert.

Es ist ferner aus der EP 06 899 75 A1 eine Rohrplatine mit einer Motorplatine bekannt. Diese besteht aus zwei spiegelbildlichen Teilen, die an der Seite zu einem Platinenrohr hin Vertiefungen aufweisen, in die das Platinenrohr eingebettet ist. Die Vertiefungen umgeben das Platinenrohr jeweils in einem Umfangsbereich von ca. 180°, so daß beide Vertiefungen zusammen das Platinenrohr auf dem gesamten Umfang umgeben. Bei der Montage werden beide Teile der Motorplatine um das Platinenrohr gelegt und miteinander verbunden, z.B. mechanisch, durch Kleben oder durch eine thermische Verbindung. Dabei wird das Platinenrohr zur Motorplatine in Umfangsrichtung und in axialer Richtung formschlüssig und/oder durch Kleben stoffschlüssig fixiert. Die zwei Teile der Motorplatine können aus Kunststoff oder Metall hergestellt und gemäß einer Ausgestaltung auch zu einem Stück vereinigt sein.

Aus vielen Bauteilen zusammengesetzte Platinen besitzen zahlreiche Schnittstellen, deren Einzeltoleranzen sich zu einer Gesamttoleranz addieren. Um eine ausreichende Qualität zu erhalten, müssen enge Einzeltoleranzen vorgeschrieben werden, was den Fertigungsaufwand erhöht. Abweichungen von einer optimalen Winkellage und Position der Wischerlager in bezug auf den Wischermotor und/oder die Fahrzeugscheibe können die Antriebskräfte vergrößern und das Wischergebnis verschlechtern. Zusätzlich steigen durch die zahlreichen Montageschritte die Montagekosten.

Weiterhin sind Druckgußplatinen bekannt, welche einen tragenden Gußkörper mit einer wabenfömigen Verstärkungsstruktur besitzen. Öffnungen zur Aufnahme eines Wischerantriebs und der Wischerlager sowie Befestigungsstellen zum Einbau in ein Fahrzeug sind in der Regel integriert. Während die Lagerstellen angeformt und größtenteils fertig gegossen sind, müssen die Entkopplungselemente montiert werden. Gegenüber Blech ist der Werkstoff teurer und besitzt eine geringere Festigkeit, insbesondere gegenüber dynamischen Belastungen.

Eine geringe Anzahl von Bauteilen weist Platinen aus Kunststoff auf. Die Lagerstellen können bei der Herstellung angeformt und teilweise fertig gespritzt werden. Der Werkstoff besitzt jedoch im allgemeinen eine geringe Festigkeit und insbesondere eine ungenügende Formsteifigkeit, so daß sich die Einstellungen unter Last stark verändern können. Ferner haben Kunststoffe ein ungünstiges Alterungs- und Temperaturverhalten. Sie schrumpfen, quellen und verspröden im Laufe der Zeit und verändern ihre Festigkeitseigenschaften insbesondere bei extremen Umgebungsbedingungen. Um eine größere Festigkeit der Platine zu erreichen, muß der Kunststoff durch Faserstoffe, z.B. durch Glasfasern oder Kohlefasern verstärkt werden. Faserverstärkte Kunststoffe sind teuer in der Herstellung, da spezielle Fertigungsverfahren erforderlich sind. Außerdem neigen sie bei niedrigen Temperaturen zum Sprödbruch.

### Vorteile der Erfindung

Nach der Erfindung besteht die Platine aus mindestens zwei Komponenten, wobei ein halbschalenförmiges Blechbiegeteil mit einem Kunststoffkörper durch Spritzgießen verbunden ist, das das Blechbiegeteil innen abstützt. Eine Aufnahme für einen Wischerantrieb und Lagerstellen für Wischerlager sowie Befestigungsstellen zum Einbau in ein Fahrzeug sind zweckmäßigerweise integriert, so daß sie im gleichen Fertigungsverfahren hergestellt werden. Dadurch können geringe Toleranzen bezüglich der Position und Winkellage eingehalten werden

Das Blechbiegeteil gewährleistet als Halbschale eine dauerhafte Formstabilität und Festigkeit selbst unter hoher großer dynamischer Biegebelastung, wobei der Kunststoffkörper zusammen mit dem Blechbiegeteil für eine gute Torsionssteifigkeit sorgt. Schon während des Spritzgießens des Kunststoffkörpers verhindert das Blechbiegeteil weitgehend das Schrumpfen und Schwinden des Kunststoffmaterials beim Abkühlen, so daß eine hohe Genauigkeit bezüglich der Lagerabstände und der Achswinkel erreicht wird. Da das Blechbiegeteil nicht altert oder quillt, bleiben die Maße und Festigkeitswerte über der Lebensdauer erhalten. Durch die Platine wird der Anstellwinkel der Lagerachsen relativ zur Fahrzeugscheibe definiert. Daher sichert eine hohe Formstabilität der Platine eine genaue Einstellung der Winkellagen und gewährleistet ein gleichbleibend gutes Wischergebnis.

Die Verbindung eines dünnwandigen Blechbiegeteils mit Kunststoff ist leicht bauend und trotzdem biege- und torsionssteif, so daß die Platine ein geringes Gewicht aufweist. In der Regel wird für den Kunststoffkörper nicht faserverstärkter Kunststoff ausreichen, jedoch kann auch Kunststoff eingesetzt werden, der durch Glasfaser oder Kohlefaser verstärkt ist. Nicht faserverstärkter Kunststoff hat den Vorteil, daß er leichter zu verarbeiten ist, bei niedrigen Temperaturen relativ elastisch bleibt und nicht zum Sprödbruch neigt. Der Kunststoffkörper selbst kann leicht ausgeführt werden, indem er teilweise mit Rippen versehen oder als Hohlprofil ausgebildet ist. Der hohe Querschnitt gewährleistet bei geringem Materialeinsatz und Gewicht eine gute Torsionssteifigkeit der Platine. Ferner können Sicken im Blechbiegeteil entfallen, das aufgrund der Umformung zu einem halbschalenförmigen U-Profil schon eine gute Biegefestigkeit besitzt. Dabei wird der Kunststoffkörper zweckmäßigerweise überwiegend auf der Seite der Platine angeordnet, die im Regelfall auf Druck belastet wird, während das Blechbiegeteil mit einer deutlich höheren Zugfestigkeit überwiegend im Bereich der Zugkräfte liegt. Da die große Zugfestigkeit des Blechbiegeteils mit dem geringen Gewicht des Kunststoffkörpers kombiniert ist, erreicht man insgesamt ein geringes Bauvolumen und Gewicht bei einer hohen Formstabilität.

Durch das Spritzgießverfahren haftet der Kunststoffkörper stoffschlüssig an dem Blechbiegeteil. Um die Verbindung zwischen den Komponenten zu verstärken und dauerhafter zu gestalten, sind zwischen den Komponenten Formschlußelemente vorgesehen, zweckmäßigerweise Lochungen im Blechbiegeteil oder Durchzüge des Blechbiegeteils in den Kunststoffkörper. Die Löcher können während des Spritzgießens als Einspritzkanäle für den Kunststoff genutzt werden.

Zudem kann der Kunststoffkörper zum Korrosionsschutz beitragen, zumal wenn er das Blechbiegeteil von beiden Seiten großflächig abdeckt oder ganz einbettet. Zum Korrosionsschutz wird das Blechbiegeteil auch zweckmäßigerweise aus verzinktem Stahl oder Aluminium oder einer Aluminiumlegierung hergestellt. Der Kunststoffkörper unterbindet an den Befestigungsstellen eine mögliche Kontaktkorrosion.

Zu Integration eines Wischerlagers und/oder einer Aufnahme für den Wischerantrieb und/oder einer Befestigungsstelle weist das Blechbiegeteil im Bereich Durchbrüche auf, an die sich zylindrische Stutzen anschließen und zweckmäßigerweise angeformt sind. Beim Spritzgießen des Kunststoffkörpers werden diese Stutzen so umspritzt, daß fertige Lagerstellen entstehen, welche die Stutzen nach oben und unten überragen. Der Kunststoff des Kunststoffkörpers dient gleichzeitig als Lagerwerkstoff. Auch notwendige Schmiernuten können mit eingearbeitet werden. Somit entfällt bei geeigneter Wahl des Kunststoffs die Montage zusätzlicher Lagerbuchsen und die Nachbearbeitung der Lagerstellen. Gute Gleit- und Verschleißeigenschaften des Kunststoffs erhöhen gleichzeitig die Lebensdauer und verbessern das Geräuschverhalten.

In gleicher Einspannung, wie der für die Kunststoffumspritzung, kann nachträglich oder bei geeigneter Ausführung des Werkstoffs auch gleichzeitig eine zweite, elastische Werkstoffkomponente eingespritzt werden, mit der die Entkopplungselemente gebildet werden. Damit wird die Anzahl der Einzelteile weiter verringert und sonst notwendige Montageschritte entfallen. Fehlerquellen durch falsche Montage sind ebenfalls ausgeschlossen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Gesamtansicht einer erfindungsgemäßen Platine,
- Fig. 2: einen Querschnitt entsprechend der Linie II-II in Fig. 1,
- Fig. 3: einen Teillängsschnitt durch die Platine im Bereich einer Lagerstelle,
- Fig. 4: einen Querschnitt entsprechend der Linie IV-IV in Fig.1,
- Fig. 5: eine Variante zu Fig. 4,
- Fig. 6: eine Variante zu Fig. 4 mit einem angeformten Entkopplungselement.

### Beschreibung der Ausführungsbeispiele

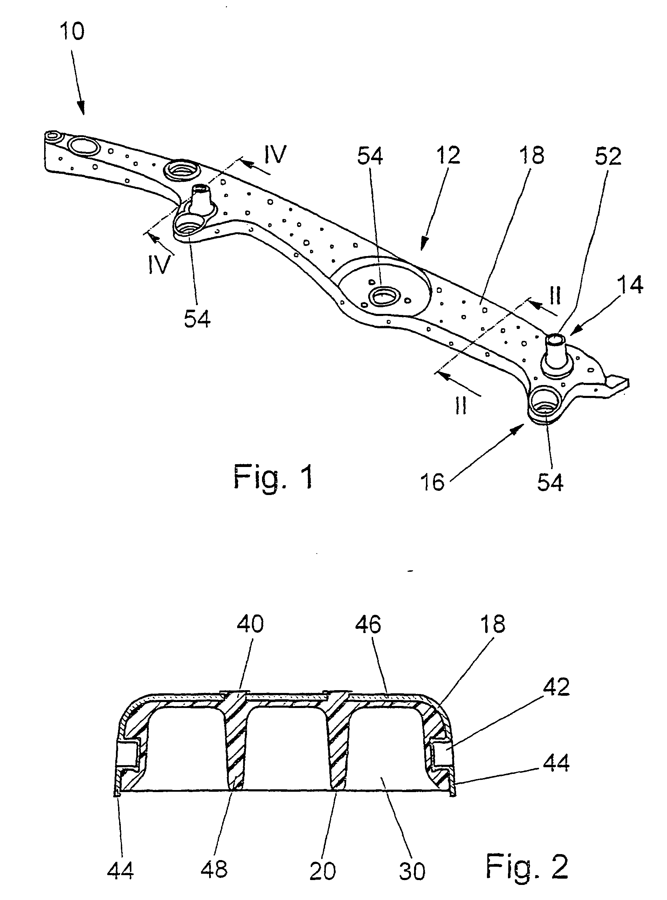

Eine Platine 10 weist eine Aufnahme 12 für einen Wischerantrieb, mindestens eine Lagerstelle 14 eines Wischerlagers und mindestens eine Befestigungsstelle 16 zum Einbau in ein Fahrzeug auf (Fig. 1). Die Platine 10 besitzt ein dünnwandiges Blechbiegeteil 18, z.B. aus Aluminium, eine Aluminiumlegierung oder verzinktem Stahl, und einen Kunststoffkörper 20. Die beiden Komponenten sind stoffschlüssig und formschlüssig miteinander verbunden.

Das Blechbiegeteil 18 weist eine im Querschnitt u-förmige Halbschale auf (Fig. 2). Die Platine 10 wird insbesondere auf Biegung und Torsion beansprucht. Deshalb ist der u-förmige Querschnitt des Blechbiegeteils 18 so gewählt, daß ein Verbindungssteg 46 zwischen den Schenkeln 44 in einer Ebene liegt, in der im regelmäßigen Belastungsfall Zugkräfte auftreten, die von dem Blechbiegeteil 18 mit seiner hohen Zugfestigkeit ohne nennenswerte Verformung aufgenommen werden.

Der Kunststoffkörper 20 besteht in der Regel aus nicht faserverstärktem Kunststoff und wird durch Umspritzen des Blechbiegeteils 18 erzeugt. Innerhalb des u-förmigen Querschnitts des Blechbiegeteils 18, also zwischen dem Verbindungssteg 46 und den Schenkeln 44, weist der Kunststoffkörper 20 Rippen 48 und Zwischenräume 30 auf, die zur Unterseite offen oder geschlossen sein können. Dabei ist eine wabenförmige Verrippung besonders günstig, da sie gegenüber Kräften aus unterschiedlichen Richtungen eine annähernd gleiche Formstabilität hat.

Der Kunststoffkörper 20, der im Biegefall hauptsächlich Druckkräfte aufnimmt, erhöht im wesentlichen die Torsionssteifigkeit der Platine 10, so daß die Platine 10 sowohl unter Biegebelastung als auch unter Torsionsbelastung eine hohe Formstabilität besitzt.

Durch das Spritzgießen haftet der Kunststoffkörper 20 stoffschlüssig am Blechbiegeteil 18. Ferner ist durch die Schalenform des Blechbiegeteils 18 sowie die Durchbrüche 52, 54 an den Lagerstellen 14 und Befestigungsstellen 16 ein gewisser Formschluß vorhanden. Um den Formschluß zwischen den beiden Komponenten zu verbessern, weist das Blechbiegeteil 18 am Verbindungssteg 46 mehrere Lochungen 40 und an den Schenkeln 44 mehrere Durchzüge 42 auf, die umspritzt werden.

Das Blechbiegeteil 18 besitzt im Bereich einer Lagerstelle 14 eines Wischerlagers und/oder einer Aufnahme 12 für den Wischerantrieb und/oder einer Befestigungsstelle 16 Durchbrüche 52, 54, an die zylindrische Stutzen 22, 24 angeformt sind.

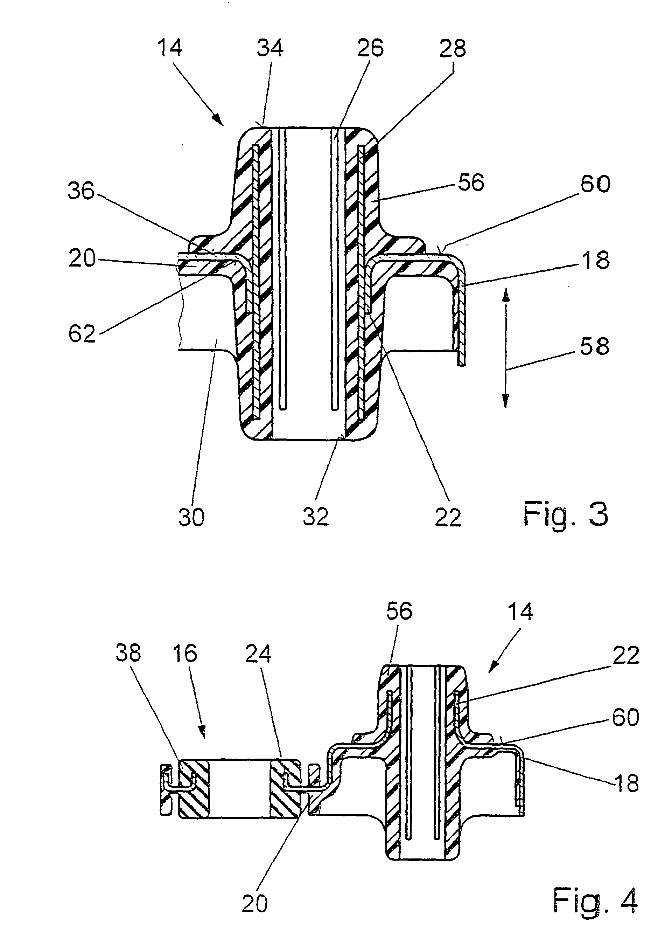

Fig. 3 zeigt einen Schnitt durch eine Lagerstelle 14. Der zylindrische Stutzen 22 wird beim Herstellen des Kunststoffkörpers 20 so umspritzt, daß eine fertige Lagerstelle 14 eines Wischerlagers entsteht. Ein angespritzter Lagerdom 56 überragt den Stutzen 22 in Pfeilrichtung 58. Dabei ist die Unterseite 62 des Blechbiegeteils 18 vollständig vom Kunststoffkörper 20 umgeben, indem gleichzeitig ein Teil des Lagerdoms 56 integriert ist. An seiner Oberseite 60 weist das Blechbiegeteil 18 dagegen nur im Bereich der Stutzen 22 eine Kunststoffumspritzung auf, welche den anderen Teil des Lagerdoms 56 bildet. Dieser Teil des Lagerdoms 56 besitzt an seiner dem Blechbiegeteil 18 zugewandten Seite eine angeformte Stützfläche 36. Diese vergrößerte Auflage stützt die Lagerstelle 14 gegenüber Biege- und Torsionsmomenten ab.

Zur zusätzlichen Versteifung der Lagerstelle 14 dient eine in den Stutzen 22 eingepreßte Hülse 28. Am Innendurchmesser 32 des Lagerdoms 56 weist die Lagerstelle 14 mehrere, axiale Schmiernuten 26 auf. Aber nur an einer Stirnseite 34 des Lagerdoms 56 ist eine Öffnung der Schmiernuten 26 zum Einfüllen des Schmiermittels vorhanden.

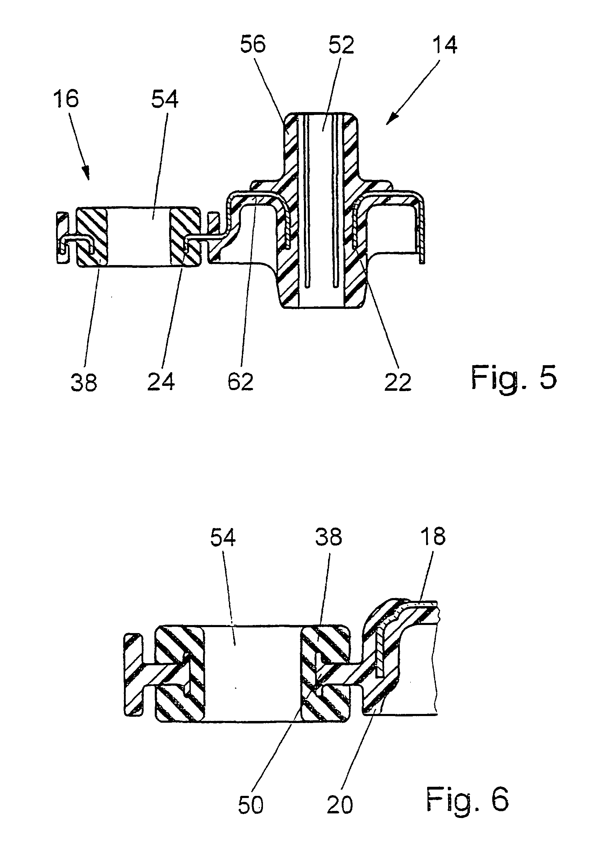

Die Erfindung sieht mehrere Varianten der angeformten Stutzen 22 für die Lagerstellen 14 und der Stutzen 24 für die Befestigungsstellen 16 vor. In Fig. 4 überragen die Stutzen 22, 24 das Blechbiegeteil 18 an der Oberseite 60, während sie in Fig. 5 an der Unterseite 62 angeformt sind und in die entgegengesetzte Richtung weisen.

Im Bereich der Befestigungsstellen 16 werden die angeformten Stutzen 24 mit einer zweiten, elastischen Werkstoffkomponente umspritzt, die Entkopplungselemente 38 bildet. Diese werden bei geeigneter Ausführung gleichzeitig mit der Kunststoffumspritzung oder nachträglich, an das Blechbiegeteil 18 angespritzt. Bei der Ausführung nach Fig. 6 wird die Befestigungsstelle vom Kunststoffkörper 20 gebildet, der einen angeformten Stutzen 50 mit einem angespritzten Entkopplungselements 38 aufweist.

## Patentansprüche

1. Platine (10) mit einer Aufnahme (12) für einen Wischerantrieb und Lagerstellen (14) für Wischerlager sowie Befestigungsstellen (16) zum Einbau in ein Fahrzeug, **dadurch gekennzeichnet, daß** die Platine (10) aus mindestens zwei Komponenten besteht, wobei ein halbschalenförmiges Blechbiegeteil (18) mit einem Kunststoffkörper (20) durch Spritzgießen verbunden ist, das das Blechbiegeteil (18) innen abstützt.

2. Platine (10) nach Anspruch 1, **dadurch gekennzeichnet, daß** zwischen dem Blechbiegeteil (18) und dem Kunststoffkörper (20) Formschlußelemente vorgesehen sind.

3. Platine (10) nach einem der vorhergehenden Ansprüche, **dadurch gekennzeichnet, daß** das Blechbiegeteil (18) aus verzinktem Stahl, Aluminium oder Magnesium besteht und einen U-förmigen Querschnitt aufweist.

4. Platine (10) nach Anspruch 3, **dadurch gekennzeichnet, daß** der Verbindungssteg (46) der beiden Schenkel (44) des U-förmigen Querschnitts in einer Ebene mit den größten Belastungen durch Zugkräfte liegt.

5. Platine (10) nach Anspruch 3 bis 4, **dadurch gekennzeichnet, daß** das Blechbiegeteil (18) im Bereich einer Lagerstelle (14) eines Wischerlagers und/oder einer Aufnahme (12) für den Wischerantrieb und/oder einer Befestigungsstelle (16) Durchbrüche (52, 54) besitzt, an die sich zylindrische Stutzen (22, 24) anschließen.

6. Platine (10) nach Anspruch 5, **dadurch gekennzeichnet, daß** die Stutzen (22, 24) an dem Blechbiegeteil (18) angeformt sind.

7. Platine (10) nach einem der vorhergehenden Ansprüche, **dadurch gekennzeichnet, daß** das Blechbiegeteil (18) Lochungen (40) und/oder Durchzüge (42) aufweist, die umspritzt werden.

8. Platine (10) nach einem der vorhergehenden Ansprüche, **dadurch gekennzeichnet, daß** das Blechbiegeteil (18) im Bereich der Durchbrüche (52, 54), Lochungen (40) und/oder Durchzüge (42) großflächig von beiden Seiten umspritzt ist.

9. Platine (10) nach einem der Ansprüche 7 oder 8, **dadurch gekennzeichnet, daß** die Lochungen (40) während des Spritzgießens als Spritzkanäle dienen.

10. Platine (10) nach einem der vorhergehenden Ansprüche, **dadurch gekennzeichnet, daß** ein umgebender Kunststoffkörper (20) aus unverstärktem Kunststoff besteht und teilweise eine Verrippung (48) aufweist.

11. Platine (10) nach einem der vorhergehenden Ansprüche, **dadurch gekennzeichnet, daß** der Kunststoffkörper (20) fertig gegossene Lagerstellen (14) aufweist, welche die Stutzen (22) des Blechbiegeteils (18) nach oben und unten überragen.

12. Platine (10) nach einem der Ansprüche 6 bis 11, **dadurch gekennzeichnet, daß** die Lagerstellen (14) durch Hülsen (28) verstärkt sind, die in die Stutzen (22) eingepreßt sind und diese verlängern.

13. Platine (10) nach einem der vorhergehenden Ansprüche, **dadurch gekennzeichnet, daß** die Lagerstellen (14) Schmiernuten (26) aufweisen.

14. Platine (10) nach einem der vorhergehenden Ansprüche, **dadurch gekennzeichnet, daß** im Bereich der Durchbrüche (52, 54) der Befestigungsstellen (16) Entkopplungselemente (38) an das Blechbiegeteil (18) oder an den Kunststoffkörper (20) angespritzt sind.

## Claims

1. Sheet blank (10) having a holder (12) for a wiper drive and bearings (14) for wiper bearings, and also fastening points (16) to fit it into a vehicle, **characterized in that** the sheet blank (10) comprises at least two components, a sheet-metal bent part (18) in the form of a half shell being connected to a plastic body (20), which supports the sheet-metal bent part (18) on the inside, by injection moulding.

2. Sheet blank (10) according to Claim 1, **characterized in that** interlocking elements are provided between the sheet-metal bent part (18) and the plastic body (20).

3. Sheet blank (10) according to one of the preceding claims, **characterized in that** the sheet-metal bent part (18) consists of galvanized steel, aluminium or magnesium and has a U-shaped cross section.

4. Sheet blank (10) according to Claim 3, **characterized in that** the connecting web (46) of the two legs (44) of the U-shaped cross section lies in a plane subjected to the greatest loads by tensile forces.

5. Sheet blank (10) according to Claim 3 to 4, **characterized in that** in the region of a bearing point (14) of a wiper bearing and/or a holder (12) for the wiper drive and/or a fastening point (16) the sheet-metal bent part (18) has openings (52, 54) to which cylindrical connecting branches (22, 24) are connected.

6. Sheet blank (10) according to Claim 5, **characterized in that** the connecting branches (22, 24) are moulded onto the sheet-metal bent part (18).

7. Sheet blank (10) according to one of the preceding claims, **characterized in that** the sheet-metal bent part (18) has perforations (40) and/or apertures (42) which are encapsulated by injection moulding.

8. Sheet blank (10) according to one of the preceding claims, **characterized in that** the sheet-metal bent part (18) is encapsulated by injection moulding on both sides over a large area in the region of the openings (52, 54), perforations (40) and/or apertures (42).

9. Sheet blank (10) according to one of Claims 7 or 8, **characterized in that** the perforations (40) serve as injection channels during the injection-moulding.

10. Sheet blank (10) according to one of the preceding claims, **characterized in that** a surrounding plastic body (20) consists of unreinforced plastic and parts of it have a ribbed structure (48).

11. Sheet blank (10) according to one of the preceding claims, **characterized in that** the plastic body (20) has ready cast bearing points (14) which protrude above and below the connecting branches (22) of the sheet-metal bent part (18).

12. Sheet blank (10) according to one of Claims 6 to 11, **characterized in that** the bearing points (14) are reinforced by sleeves (28) which are pressed into the connecting branches (22) and extend the latter.

13. Sheet blank (10) according to one of the preceding claims, **characterized in that** the bearing points (14) have lubricating grooves (26).

14. Sheet blank (10) according to one of the preceding claims, **characterized in that** decoupling elements (38) are injection-moulded onto the sheet-metal bent part (18) or onto the plastic body (20) in the region of the openings (52, 54) of the fastening points (16).

## Revendications

1. Platine (10) comprenant un logement (12) pour un entraînement d'essuie-glace, et des zones de portée (14) pour des paliers d'essuie-glace ainsi que des zones de fixation (16) pour le montage dans un véhicule,
**caractérisée en ce que**
la platine (10) est faite d'au moins deux éléments, dont une pièce de tôle pliée (18) est assemblée par moulage par injection, à un corps en matière plastique (20) qui soutient la pièce de tôle pliée (18) de l'intérieur.

2. Platine (10) selon la revendication 1,
**caractérisée en ce que**
des éléments d'assemblage par complémentarité de forme sont prévus entre la pièce de tôle pliée (18) et le corps en matière plastique (20).

3. Platine (10) selon une des revendications précédentes,
**caractérisée en ce que**
la pièce de tôle pliée (18) est faite d'acier galvanisé, d'aluminium ou de magnésium et présente une section transversale en forme de U.

4. Platine (10) selon la revendication 3,
**caractérisée en ce que**
l'âme de liaison (46) des deux branches (44) de la section transversale en forme de U s'étend dans un plan ayant les plus grosses contraintes de traction.

5. Platine (10) selon les revendications 3 à 4,
**caractérisée en ce que**
dans la région d'une zone de portée (14) d'un palier d'essuie-glace et/ou d'un logement (12) prévu pour l'entraînement d'essuie-glace et/ou d'une zone de fixation (16), la pièce de tôle pliée (18) présente des ajours (52, 54) auxquels se raccordent des tubulures cylindriques (22, 24).

6. Platine (10) selon la revendication 5,
**caractérisée en ce que**
les tubulures (22, 24) sont venues de formage sur la pièce de tôle pliée (18).

7. Platine (10) selon une des revendications précédentes,
**caractérisée en ce que**
la pièce de tôle pliée (18) présente des perforations (40) et/ou des collets (42) qui sont surmoulés.

8. Platine (10) selon une des revendications précédentes,
**caractérisée en ce que**
la pièce de tôle pliée (18) est surmoulée sur une grande surface sur les deux faces dans la région des ajours (52, 54), des perforations (40) et/ou des collets (42).

9. Platine (10) selon une des revendications 7 ou 8,
**caractérisée en ce que**
les perforations (40) servent de canaux d'injection pendant le moulage par injection.

10. Platine (10) selon une des revendications précédentes,
**caractérisée en ce que**
un corps en matière plastique enveloppant (20) est composé d'une matière plastique non renforcée et présente partiellement un nervurage (48).

11. Platine (10) selon une des revendications précédentes,
**caractérisée en ce que**
le corps en matière plastique (20) présente des zones de portée (14) venues de moulage sous leur forme définitive qui débordent vers le haut et vers le bas au-delà des tubulures (22) de la pièce de tôle pliée (18).

12. Platine (10) selon une des revendications 6 à 11,
**caractérisée en ce que**
les zones de portée (14) sont renforcées par des douilles (28) emmanchées à force dans les tubulures (22) et qui prolongent ces dernières.

13. Platine (10) selon une des revendications précédentes,
**caractérisée en ce que**
les zones de portée (14) présentent des rainures de lubrification (26).

14. Platine (10) selon une des revendications précédentes,
**caractérisée en ce que**
des éléments de découplage (38) sont moulés par injection sur la pièce de tôle pliée (18) ou sur le corps en matière plastique (20) dans la région des ajours (52, 54) des zones de fixation (16).
